(19) Europäisches Patentamt
European Patent Office
Office européen des brevets

(11) **EP 4 321 897 A1**

(12) **EUROPEAN PATENT APPLICATION**
published in accordance with Art. 153(4) EPC

(43) Date of publication:
**14.02.2024 Bulletin 2024/07**

(21) Application number: **21938373.4**

(22) Date of filing: **29.04.2021**

(51) International Patent Classification (IPC):
**G01S 7/481** *(2006.01)*    **G01S 17/02** *(2020.01)*

(86) International application number:
**PCT/CN2021/090982**

(87) International publication number:
**WO 2022/226893 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang**
**Shenzhen, Guangdong 518129 (CN)**

(72) Inventors:
• **HAN, Wei**
  **Shenzhen, Guangdong 518129 (CN)**
• **AN, Kai**
  **Shenzhen, Guangdong 518129 (CN)**
• **WANG, Hongliang**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **LASER DETECTION DEVICE AND CONTROL METHOD AND CONTROL DEVICE THEREFOR, AND TERMINAL**

(57)    A detection apparatus, a detection apparatus control method, a control apparatus, a chip, a computer-readable storage medium, and a terminal are provided, which may be applied to the field such as intelligent driving, autonomous driving, intelligent manufacturing, or surveying and mapping. In a detection apparatus (100), in addition to a laser transceiver module configured to perform target detection, a reflector (120) and a synchronous transceiver module that implements a synchronization function are further disposed. The reflector (120) is configured to reflect an emitted light beam from the laser transceiver module to a detection area, and reflect a reflected light beam from the detection area to the laser transceiver module. Further, the synchronous transceiver module detects a light beam passing through the reflector (120), to implement high-precision rotation speed measurement and rotation angle measurement of the reflector (120), adjust a rotation speed of the reflector in time, and improve detection precision of the detection apparatus (100). Especially, in the detection apparatus (100) that is cost-sensitive but has a high precision requirement, costs can be greatly reduced while performance is ensured. Specifically, the detection apparatus (100) may be a lidar.

FIG. 3

EP 4 321 897 A1

**Description**

**TECHNICAL FIELD**

This application relates to sensor technologies, and in particular, to a detection apparatus, a detection apparatus control method, a control apparatus, and a terminal, which may be applied to the field such as intelligent driving, autonomous driving, intelligent manufacturing, or surveying and mapping.

**BACKGROUND**

A lidar (light detection and ranging, Lidar) system is used for distance detection. A lidar emits laser light to a detection target, and then a receiver collects an optical signal reflected by the target. A distance to the target is determined by measuring roundtrip time of a transmitted signal. The lidar system can realize a long-distance and high-precision distance measurement function because of advantages such as good directivity and monochromaticity of the laser light. Through scanning or multi-array detection, the lidar system extends a single-point distance measurement result to two dimensions, so as to form a distance image. At present, the lidar system has been applied in many scenarios such as autonomous driving, three-dimensional building modeling, terrain surveying and mapping, robots, and rendezvous and docking. The lidar system usually includes three types: a mechanical lidar type, a solid-state lidar type, and a hybrid solid-state lidar type between the mechanical lidar type and the solid-state lidar type.

In some systems, lidars use polygonal mirrors to scan light beams, so as to achieve a large horizontal field of view (field of view, FOV). A photoelectric encoder disposed on a motor that drives the polygonal mirror to rotate is used to read a real-time rotation angle of the polygonal mirror, and control a light emitting time sequence and a point cloud synchronization time sequence. If the read real-time rotation angle needs to achieve higher precision, a more precise optical code disc is required. However, the optical code disc becomes more expensive with increase of precision of the optical code disc.

**SUMMARY**

This application provides a detection apparatus, a detection apparatus control method, a control apparatus, and a terminal, to greatly reduce costs in a detection apparatus that is cost-sensitive but has a high precision requirement.

According to a first aspect, a detection apparatus is provided, including at least one laser emitting unit, at least one laser detection unit, a reflector, and at least one controller. The at least one laser emitting unit includes a first laser emitting unit, and the at least one laser detection unit includes a first laser detection unit. The first laser emitting unit is configured to emit a first light beam, where the first light beam is received by the first laser detection unit after being reflected from a first location of the reflector. The at least one controller controls, based on a reflected light beam of the first light beam received by the first laser detection unit, one or more laser emitting units to emit a second light beam, where the second light beam is used for target detection.

According to this embodiment of this application, the first laser emitting unit and the first laser detection unit may be used as a synchronous transceiver module, to implement synchronous control on a laser detection process, and reduce costs while ensuring high detection precision of the detection apparatus.

With reference to the first aspect, in some possible implementations, the at least one controller further adjusts a rotation speed of the reflector based on the reflected light beam of the first light beam received by the first laser detection unit.

According to this embodiment of this application, by using the first light beam emitted by the laser emitting unit and the reflected light beam of the first light beam received by the laser detection unit, the controller may measure the rotation speed and/or a tilt angle of the reflector, to adjust the rotation speed of the reflector, so that the rotation speed of the reflector remains stable. In this way, precision of emitting the second light beam by the second laser emitting unit is ensured, and detection precision of the detection apparatus is ensured.

With reference to the first aspect, in some possible implementations, the one or more laser emitting units include the first laser emitting unit, and the at least one controller is configured to control the first laser emitting unit to emit the second light beam; or the at least one laser emitting unit includes at least one second laser emitting unit, the at least one controller is configured to control the at least one second laser emitting unit to emit the second light beam, and the second laser emitting unit is different from the first laser emitting unit.

According to this embodiment of this application, the first laser emitting unit may be the same as the second laser emitting unit, or the first laser detection unit may be the same as the second laser detection unit. For example, the detection apparatus may include only one laser emitting unit or a group of laser emitting units. In this structure, a volume of the detection apparatus is further reduced, and the laser emitting unit or any laser emitting unit in the group may be used as the first laser emitting unit and the second laser emitting unit in different time, that is, the laser emitting unit is reused. Similarly, the detection apparatus may include only one laser detection unit or a group of laser detection units, and the laser detection unit is reused.

With reference to the first aspect, in some possible implementations, the second light beam is emitted to a detection area through the reflector; and one or more laser detection units corresponding to the one or more laser emitting units are configured to receive a reflected light beam of the second light beam by using the reflector.

According to this embodiment of this application, the second laser emitting unit and the second laser detection unit may be used as target detection units, and are configured to perform light beam detection on a target in the detection area.

With reference to the first aspect, in some possible implementations, the at least one controller is configured to perform target detection based on the reflected light beam of the second light beam.

With reference to the first aspect, in some possible implementations, locations of the first laser emitting unit and the first laser detection unit are corresponding to the first location of the reflector.

According to this embodiment of this application, the first location of the reflector is not fixed, and relative locations of the first laser emitting unit, the first laser detection unit, and the reflector may be changed based on an internal layout of the detection apparatus, to adjust a location of the first location on the reflector, so as to implement more flexible synchronization control. Further, after the detection apparatus is delivered from a factory, the first location of the reflector may be set to a fixed location.

With reference to the first aspect, in some possible implementations, the reflector includes a plurality of reflective surfaces, and the first location is located on a first reflective surface in the plurality of reflective surfaces; and the first reflective surface is any one of the plurality of reflective surfaces.

According to this embodiment of this application, as a quantity of the first locations on the reflector increases, the reflector can measure the rotation speed for a plurality of times in a process of rotating the reflector by 360°, and continuously adjust the rotation speed of the reflector. This can eliminate an accumulated error that may be caused by long-time rotation of the reflector, and can also suppress rotation speed fluctuation of the reflector.

With reference to the first aspect, in some possible implementation, in the plurality of reflective surfaces, angles between first locations of any two groups of adj acent reflective surfaces are the same.

According to this embodiment of this application, when the angles between first locations of any two groups of adjacent reflective surfaces are the same, the reflector is in the shape of a regular prism. A cross section of the reflector is in the shape of a regular polygon, and a side surface of the reflector is used as the reflective surface, so that the controller can conveniently control the rotation speed of the reflector.

With reference to the first aspect, in some possible implementations, a first emitting mirror group is disposed between the first laser emitting unit and the reflector, and the first emitting mirror group is configured to focus a light beam from the first laser emitting unit to the reflector; and/or a first receiving mirror group is disposed between the first laser detection unit and the reflector, and the first receiving mirror group is configured to focus, to the first laser detection unit, a reflected light beam reflected from the first location.

According to this embodiment of this application, a mirror group may be additionally disposed on an optical path of a light beam emitted by the laser emitting unit or an optical path of a light beam received by the laser detection unit, to implement focusing of the light beam, so as to improve detection precision of the detection apparatus.

With reference to the first aspect, in some possible implementations, the mirror group includes at least one narrow-band optical filter.

According to this embodiment of this application, the narrow-band optical filter may be configured to filter out light outside an operating frequency band of the laser emitting unit or the laser detection unit, to reduce interference and improve detection precision. For a definition of the narrow-band optical filter, refer to descriptions in the conventional technology.

With reference to the first aspect, in some possible implementations, the at least one laser emitting unit includes a second laser emitting unit, the at least one laser detection unit includes a second laser detection unit, the first laser emitting unit and the first laser detection unit are located on a first side of the reflector, the second laser emitting unit and the second laser detection unit are located on a second side of the reflector, and the second side is different from the first side. The second laser emitting unit is configured to emit the second light beam, and the second detection unit is configured to receive the second light beam reflected by the reflector.

With reference to the first aspect, in some possible implementations, the at least one laser emitting unit includes a second laser emitting unit, the at least one laser detection unit includes a second laser detection unit, and the first laser emitting unit, the first laser detection unit, the second laser emitting unit, and the second laser detection unit are located on a same side of the reflector. The second laser emitting unit is configured to emit the second light beam, and the second detection unit is configured to receive the second light beam reflected by the reflector.

According to this embodiment of this application, in actual production or design, the detection apparatus may include a plurality of laser emitting units and laser detection units, and locations of the plurality of laser emitting units, the laser detection units, and the reflector may be adjusted based on internal space or a design requirement of the detection apparatus. This is not limited in this application.

With reference to the first aspect, in some possible implementations, the reflector is a swing mirror, a three-surface reflector, a four-surface reflector, a five-surface reflector, or a six-surface reflector.

According to this embodiment of this application, an example in which the reflector is a four-surface reflector in a polygonal mirror is used for description. However, this is not limited in this application, and may be selected based on an actual design or production requirement.

According to a second aspect, a control method is provided, applied to a detection apparatus. The method includes: controlling a first laser emitting unit of the detection apparatus to emit a first light beam at a first emission moment, where the first light beam is received by a first laser detection unit of the detection apparatus after being reflected from a first location of a reflector of the detection apparatus; controlling the first laser emitting unit to emit a second light beam at a second emission moment, where the second light beam is received by the first laser detection unit after being reflected from a second location of the reflector; and controlling a rotation speed of the reflector based on an angle by which the reflector rotates between the first emission moment and the second emission moment.

According to this embodiment of this application, because the first location and the second location on the reflector are determined, the angle by which the reflector rotates between the first emission moment and the second emission moment may be determined. The rotation speed of the reflector may be determined based on rotation time of the reflector and the angle by which the reflector rotates. In addition, a rotation speed of the reflector at a next moment may be adjusted based on the rotation speed of the reflector. This can eliminate an accumulated error that may be caused by long-time rotation of the reflector, and can also suppress rotation speed fluctuation of the reflector, so that the rotation speed of the reflector remains stable. In this way, precision of emitting a light beam when the laser emitting unit in the detection apparatus performs detection is ensured, and detection precision of the detection apparatus is improved.

With reference to the second aspect, in some possible implementations, the controlling a rotation speed of the reflector includes: determining the rotation speed of the reflector based on the angle by which the reflector rotates between the first emission moment and the second emission moment; and adjusting a rotation speed of a reflector at a next moment based on the rotation speed of the reflector.

With reference to the second aspect, in some possible implementations, the method further includes: controlling, based on a reflected light beam of the first light beam received by the first laser detection unit, one or more laser emitting units to emit a third light beam; and emitting the third light beam to a detection area through the reflector. One or more laser detection units corresponding to the one or more laser emitting units are configured to receive, by using the reflector, a reflected light beam that is of the third light beam and that passes through the detection area.

With reference to the second aspect, in some possible implementations, the controlling one or more laser emitting units to emit a third light beam includes: controlling the one or more laser emitting units to start emitting the third light beam at a third emission moment, where a rotation angle of the reflector at the third emission moment is a first angle; and controlling the one or more laser emitting units to stop emitting the third light beam at a fourth emission moment, where a rotation angle of the reflector at the fourth emission moment is a second angle. A rotation angle of the reflector at the first emission moment is a third angle, and the third angle does not belong to an angle range of the first angle and the second angle. It may also be understood that sending time of a light beam used for rotation speed measurement is staggered from sending time of a light beam used for target detection.

With reference to the second aspect, in some possible implementations, the method further includes: determining the third emission moment based on the first emission moment and a first delay, where the first delay is time required for the reflector to rotate from the third angle to the first angle. Specifically, the first delay may be predefined or preset, or may be corresponding to some design parameters of the detection apparatus. This is not specifically limited herein.

With reference to the second aspect, in some possible implementations, the determining the third emission moment based on the first emission moment and a first delay includes: determining the fourth moment based on the third moment, the first delay, and a first preset value, where the first preset value is related to an included angle error of the reflector.

With reference to the second aspect, in some possible implementations, the method further includes: determining an offset angle of the reflector based on a first trajectory and a second trajectory that are on a detection surface of the first laser detection unit and that are obtained after the first light beam is reflected from the first location of the reflector, where the second trajectory is a trajectory that is on the detection surface and that is obtained after the first light beam is reflected from the first location of the reflector when the reflector does not deviate; and correcting, based on the offset angle, point cloud data obtained by the detection apparatus, where the point cloud data is obtained based on the reflected light beam that is of the third light beam and that passes through the detection area.

With reference to the second aspect, in some possible implementations, the detection surface is triangular or trapezoidal.

With reference to the second aspect, in some possible implementations, the detection surface is rectangular, and an angle formed by a center line of the detection surface and the second trajectory is an acute angle. According to a third aspect, a control apparatus for a detection apparatus is provided, including at least one memory and at least one processor, where the at least one memory is configured to store a program, and the at least one processor is configured to run the program, to implement the method according to the second aspect.

According to a fourth aspect, a chip is provided, including at least one processing unit and an interface circuit, where the interface circuit is configured to provide program instructions or data for the at least one processing unit, and the at least one processing unit is configured to execute the program instructions, to implement the method according to the second aspect or support function implementation of the apparatus according to the first aspect.

According to a fifth aspect, a computer-readable storage medium is provided, where the computer-readable storage medium stores program code executed by a device, and when the program code is executed by the device, the method according to the second aspect is implemented.

According to a sixth aspect, a terminal is provided, including the detection apparatus according to the first aspect, or the control apparatus according to the third aspect, or the chip according to the fourth aspect. Further, the terminal may be an intelligent transportation device (a vehicle or an unmanned aerial vehicle), a smart home device, an intelligent manufacturing device, a surveying and mapping device, a robot, or the like. The intelligent transportation device may be, for example, an automated guided vehicle (automated guided vehicle, AGV) or an unmanned transportation vehicle.

**BRIEF DESCRIPTION OF DRAWINGS**

FIG. 1 is a schematic diagram of a structure of an incremental encoder in the conventional technology;
FIG. 2 is a schematic diagram of a structure of an absolute encoder in the conventional technology;
FIG. 3 is a top view of a detection apparatus according to an embodiment of this application;
FIG. 4 is a side view of a detection apparatus according to an embodiment of this application;
FIG. 5 is a schematic diagram of a structure of a detection apparatus according to an embodiment of this application;
FIG. 6 is a schematic diagram of a reflector according to an embodiment of this application;
FIG. 7 is a schematic diagram of a structure of a detection apparatus according to an embodiment of this application;
FIG. 8 is a schematic diagram of a structure of a detection apparatus according to an embodiment of this application;
FIG. 9 shows a control method according to an embodiment of this application;
FIG. 10 is a schematic diagram of an angle of view of a second laser emitting unit 530 in a detection apparatus according to an embodiment of this application;
FIG. 11 is a schematic diagram when a reflector tilts according to an embodiment of this application;
FIG. 12 is a schematic diagram of trajectories on a detection surface of a reflector at different tilt degrees according to an embodiment of this application; and
FIG. 13 is a schematic diagram of a structure of a control apparatus of a detection apparatus according to an embodiment of this application.

**DESCRIPTION OF EMBODIMENTS**

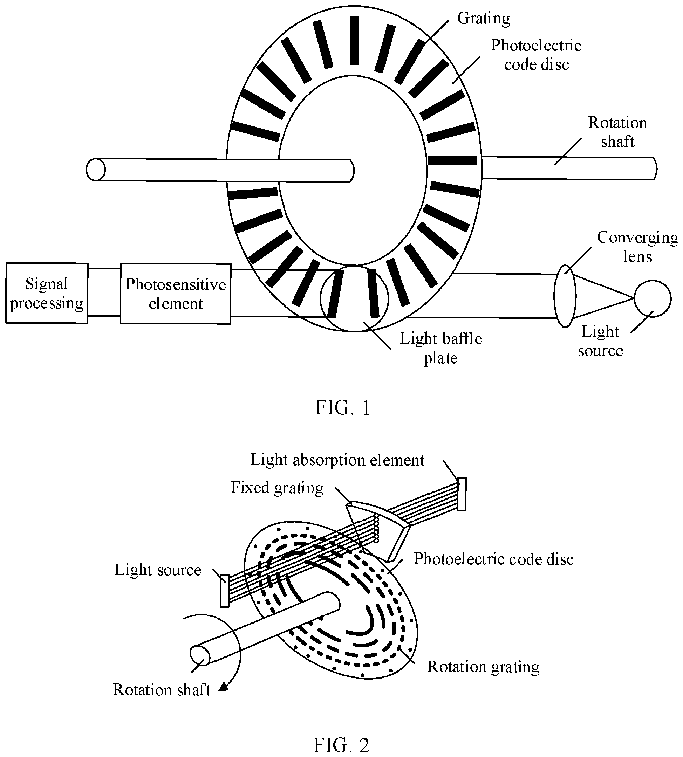

The following describes the technical solutions of this application with reference to the accompanying drawings.
In a lidar, a real-time rotation angle of a polygonal mirror is read by using a photoelectric encoder disposed on a motor that drives the polygonal mirror to rotate. Further, the lidar reads the real-time rotation angle of the polygonal mirror by using the photoelectric encoder, to control a light emitting time sequence and a point cloud synchronization time sequence. The light emitting time sequence may be understood as a time sequence in which a laser emitting unit starts emitting a light beam and stops emitting the light beam, or may be simply understood as a working time sequence of the laser emitting unit. The point cloud synchronization time sequence may be understood as a time sequence in which the laser detection unit starts receiving a reflected light beam of a light beam emitted by the laser emitting unit, or may be simply understood as a working time sequence of the laser detection unit. Therefore, the photoelectric encoder is especially important for reading the real-time rotation angle of the polygonal mirror, and measurement accuracy of the photoelectric encoder directly affects measurement accuracy of the lidar.
Photoelectric encoders are usually classified into incremental encoders and absolute encoders. FIG. 1 is a schematic diagram of a structure of an incremental encoder in the conventional technology.
The incremental encoder converts an angle by which a photoelectric code disc rotates along with a rotation shaft into a periodic electrical signal, and then converts the electrical signal into a counting pulse. A quantity of pulses represents a rotation angle of a polygonal mirror at a current moment. As shown in FIG. 1, a grating including bright and dark spaced patterns is disposed on the photoelectric code disc, and a light source and a photosensitive element are respectively installed on two sides of the code disc. When the photoelectric code disc rotates along with the rotation shaft, light luminance changes once every time the photoelectric code disc rotates through one grating. After being shaped and amplified, an electric pulse output signal with a specific amplitude and power may be obtained. A quantity of pulses is equal to a quantity of slits through which the photoelectric code disc rotates. The pulse signal is sent to a counter for counting, so that the angle by which the photoelectric code disc rotates can be measured, to obtain the rotation angle of the polygonal mirror at the current moment.

FIG. 2 is a schematic diagram of a structure of an absolute encoder in the conventional technology.

There are a plurality of lines on a photoelectric code disc of the absolute encoder, and each circle of the photoelectric code disc is provided with 2, 4, 8, 16 ..., and $2^n$ lines in sequence. In this way, at each location of the absolute encoder, a group of unique binary codes (Gray codes) from 2 to the power of zero to 2 to the power of n-1 is obtained by reading brightness and darkness of a light source irradiated on each line. This is called an n-bit absolute encoder. Such encoder is determined by a mechanical location of the photoelectric code disc, and is not affected by power failure and interference. Each location, determined by the mechanical location, of the absolute encoder is unique, and does not need to remember, find a reference point, or count continuously. When the location needs to be known, the absolute encoder reads the location. This greatly improves anti-interference performance and data reliability of the encoder. As shown in FIG. 2, a working mode of the absolute encoder is the same as that of the incremental encoder. A difference lies in that the absolute encoder has a plurality of circles of gratings, to implement absolute encoding at different angle locations. In this way, an angle by which the photoelectric code disc rotates can be measured, to obtain a rotation angle of a polygonal mirror at a current moment.

It should be understood that, for the incremental encoder, to achieve higher angle detection precision, a photoelectric code disc including gratings of more channels is required. Generally, a quantity of channels of the photoelectric code disc is 5 to 10000. A higher quantity of channels indicates a higher price. Therefore, costs of a multi-channel optical code disc of the absolute encoder are higher than those of the incremental encoder.

This application provides a detection apparatus, a detection apparatus control method, a control apparatus, and a terminal, to ensure detection precision of the detection apparatus and greatly reduce costs.

To ensure that the following embodiments are clear, first, some terms related to the detection apparatus are explained.

A rotation speed of a reflector may be understood as a quantity of revolutions that the reflector rotates around a rotation shaft in unit time when the reflector moves around the rotation shaft.

A rotation angle of the reflector may be understood as an angle between a reflective surface of the reflector and a first direction. The angle may be an acute angle or may be 0° (the reflective surface coincides with the first direction), and the first direction may be a reference angle. For example, the first direction may be a direction parallel to a horizontal plane.

A tilt angle of the reflector may be understood as a difference between an angle between a rotation shaft of the reflector and the reference plane in a normal state and an angle between the rotation shaft of the reflector and the reference plane in an inclined state. For example, the reference plane may be a horizontal plane.

A frame may be understood as a set of point cloud data obtained each time the detection apparatus detects a target by using a light beam. For example, a target echo generated by scanning a reflective surface may correspond to a frame of point cloud data. For example, if the reflector is a tetrahedral mirror, and one first location is disposed on each reflective surface of the tetrahedral mirror, the tetrahedral mirror rotates for one cycle (360°), and the detection apparatus forms four frames of data. When the reflector is a single-surface reflector, the single-surface reflector has only one working reflective surface, and only one first location is disposed on the working reflective surface. The single-surface reflector rotates for one cycle to form only one frame of data.

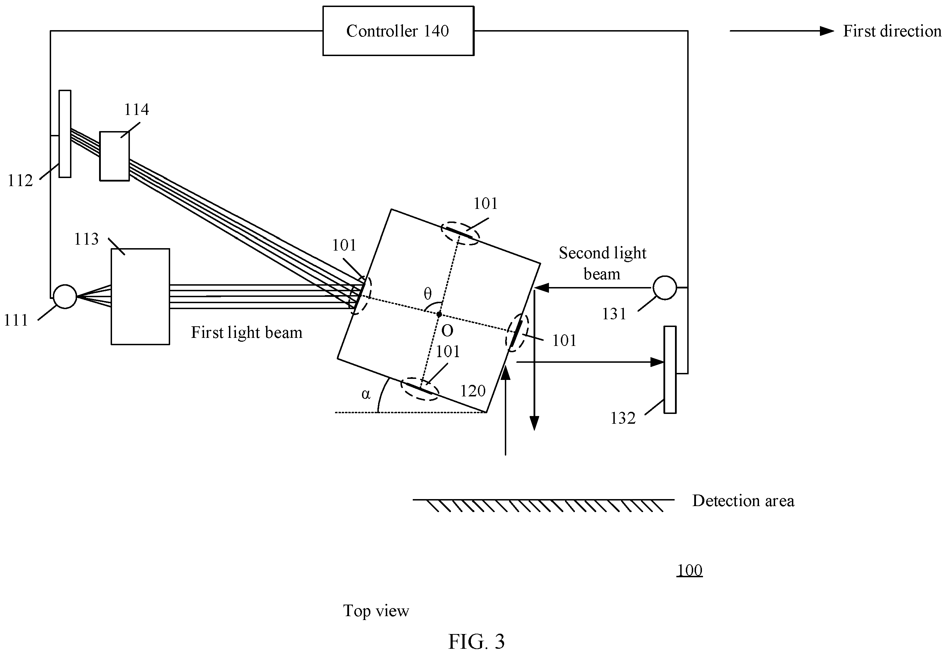

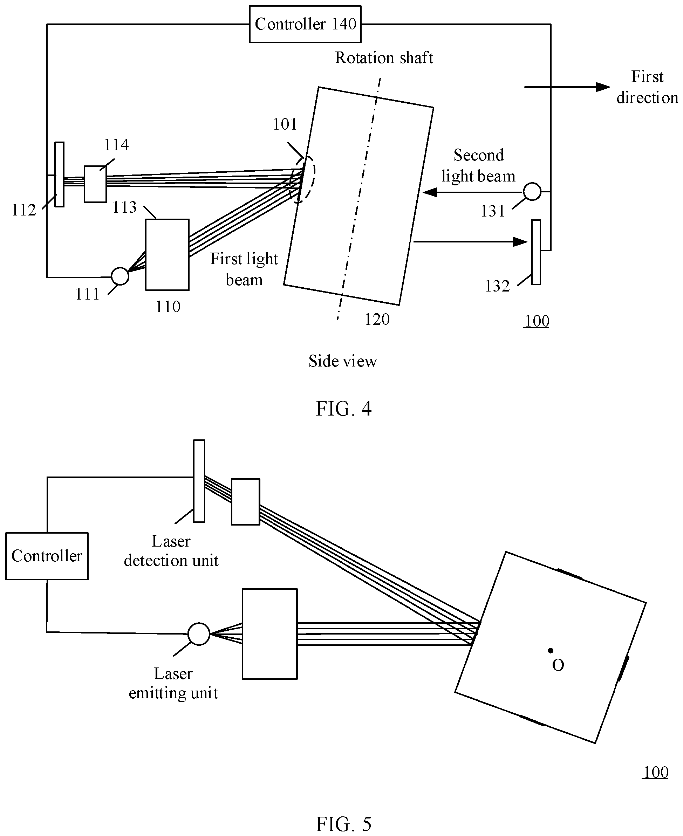

FIG. 3 and FIG. 4 are schematic diagrams of a structure of a detection apparatus according to an embodiment of this application. FIG. 3 is a top view of a detection apparatus according to an embodiment of this application. FIG. 4 is a side view of a detection apparatus according to an embodiment of this application.

As shown in FIG. 3 and FIG. 4, the detection apparatus 100 may include a first laser emitting unit 111, a first laser detection unit 112, a second laser emitting unit 131, a reflector 120, and at least one controller 140.

The first laser emitting unit 111 is configured to emit a first light beam, and the first light beam is received by the first laser detection unit 112 after being reflected from a first location 101 of the reflector 120. The controller 140 controls, based on a reflected light beam of the first light beam received by the first laser detection unit 112, the second laser emitting unit 131 to emit a second light beam. Specifically, the second light beam is used for target detection, and compared with the second light beam, the first light beam may be considered to be used to perform synchronization. For example, through the synchronization, at a first moment after the first laser emitting unit 111 emits the first light beam, the controller 140 may control the second laser emitting unit 131 to emit the second light beam to perform target detection.

According to this design, an emitting time sequence of a light beam used for target detection can be controlled with low costs and low design complexity, to implement a precise light emitting time sequence and a precise point cloud synchronization time sequence, and ensure detection precision of the detection apparatus.

In this design, the first location may be any first location on the reflector. For example, the reflector may have a plurality of reflective surfaces, and each reflective surface has one or more corresponding first locations. For another example, the reflector may have a reflective surface, and there is one or more first locations on the reflective surface.

Optionally, the detection apparatus 100 may further include a second laser detection unit 132. The second laser detection unit 132 may be configured to receive a reflected light beam that is of the second light beam and that passes through a target in a detection area. As shown in FIG. 3, the second laser emitting unit 131 and the second laser detection unit 132 complete target detection.

It should be noted that herein, an example in which the first laser emitting unit 111 is different from the second laser emitting unit 131 and the first laser detection unit 112 is different from the second laser detection unit 132 is used for description. A person skilled in the art may learn that in another possible design, the first laser emitting unit 111 may be the same as the second laser emitting unit 131, and/or the first laser detection unit 112 may be the same as the second laser detection unit 132. For example, the detection apparatus 100 may include only one laser emitting unit or a group of laser emitting units, as shown in FIG. 5. In this structure, a volume of the detection apparatus 100 is further reduced, and the laser emitting unit or any laser emitting unit in the group may be used as the first laser emitting unit 111 and the second laser emitting unit 131 shown in FIG. 3 in different time, that is, the laser emitting unit is reused. Similarly, the detection apparatus 100 may include only one laser detection unit or a group of laser detection units, and the laser detection unit is reused to perform synchronization and target detection.

In such a detection apparatus, the controller performs detection on a first location corresponding to a synchronous transceiver module configured to perform synchronization, so as to implement emission and detection control on a light beam used for target detection. In this way, synchronization effect is achieved and detection precision is ensured.

It should be understood that, when the detection apparatus 100 works, the reflector 120 rotates along a rotation shaft, so that the second light beam emitted by the second laser emitting unit 131 can detect the target with rotation of the reflector 120. The controller 140 may obtain point cloud data of the target by using a reflected light beam of the second light beam received by the second laser detection unit 132, to implement target detection. Specifically, the first light beam emitted by the first laser emitting unit 111 is detected by the first laser detection unit 112 after being reflected at the first location 101 of the reflector. The controller 140 may control, based on a detection result of the first laser detection unit, rotation or a location of the reflector, or control, based on a detection result of the first laser detection unit, emission of the second light beam used for target detection.

When an emitting mirror includes a plurality of reflective surfaces (as shown in FIG. 3, the reflector has four surfaces, and a corresponding first location is disposed on each surface), after receiving the reflected light beam of the first light beam twice consecutively, the first laser detection unit 112 may determine time for the reflector 120 to rotate through two adjacent first locations 101. Because each first location 101 on the reflector 120 is preset, the controller 140 may determine an angle by which the reflector 120 rotates through the two adjacent first locations 101, may determine a rotation speed of the reflector 120 based on the determined time and angle by which the reflector 120 rotates, and may determine a rotation angle $\alpha$ (an angle with the first direction) of the reflector 120 at a current moment based on the rotation speed and the rotation time of the reflector 120, as shown in FIG. 3. In the detection apparatus 100, the second laser emitting unit 131 and the second laser detection unit 132 may be used as target detection units, and are configured to perform light beam detection on the target. The first laser emitting unit 111 and the first laser detection unit 112 may be used as a synchronous transceiver module, and are configured to measure a rotation speed of the reflector 120, and adjust a rotation speed and/or a rotation angle of the reflector 120, to ensure detection precision of the detection apparatus 100.

In the detection apparatus provided in this embodiment of this application, the first laser emitting unit and the first laser detection unit are used as a synchronous transceiver module. Compared with a high-density optical code disc, the detection apparatus is greatly reduced in costs, and can achieve angle measurement precision of 0.001°. In addition, measurement may be performed for a plurality of times in a rotation process of the reflector, to ensure that a rotation speed of the reflector is stabilized at a reference rotation speed, ensure precision of emitting the second light beam by the second laser emitting unit, and accurately control a light emitting time sequence and a point cloud synchronization time sequence of the detection apparatus, so as to improve detection precision of the detection apparatus.

Optionally, the detection apparatus 100 may include a plurality of laser emitting units and a plurality of laser detection units, to further improve detection precision or a detection range of the detection apparatus 100. This is not limited in this application, and may be adjusted based on an actual design or production requirement.

Specifically, the first location 101 may be an area of a specific size on the reflector 120. When the reflector 120 rotates, the light beam emitted by the first laser emitting unit 111 reaches the area, and the light beam may be reflected to the first laser detection unit 112.

In the solution of this application, locations of the first laser emitting unit 111 and the first laser detection unit 112 are corresponding to the first location 101 of the reflector 120.

In a design, in a detection apparatus assembly process, the first location 101 of the reflector 120 is not fixed.

The first location 101 may be changed by adjusting relative locations of the first laser emitting unit 111, the first laser detection unit 112, and the reflector 120. For example, when the first laser emitting unit 111 and the first laser detection unit 112 integrally move upward or downward relative to the location of the reflector 120, the first location 101 on the reflector 120 also moves upward or downward, to ensure that the light beam emitted by the first laser emitting unit 111 can be received by the first laser detection unit 112 after being reflected from the first location 101. Therefore, relative locations of the first laser emitting unit 111, the first laser detection unit 112, and the reflector 120 may be changed based on an internal layout of the detection apparatus 100, to adjust a location of the first location 101 on the reflector 120.

In another design, to improve detection precision, the first location 101 on the reflector 120 may be defined or set. For example, a start location or an end location of any reflective surface of the reflector may be defined or set. Locations of the first laser emitting unit 111 and the first laser detection unit 112 are adjusted based on the first location. Therefore, relative locations between the first laser emitting unit 111, the first laser detection unit 112, and the reflector 120 may be adjusted based on space inside the detection apparatus, to determine the first location 101 more flexibly. This is not limited in this application. Further, after the detection apparatus is assembled and configured on a terminal (for example, a vehicle, an unmanned aerial vehicle, or a robot), to ensure stability and precision of the apparatus, the first location may also be understood as a fixed location, and does not change.

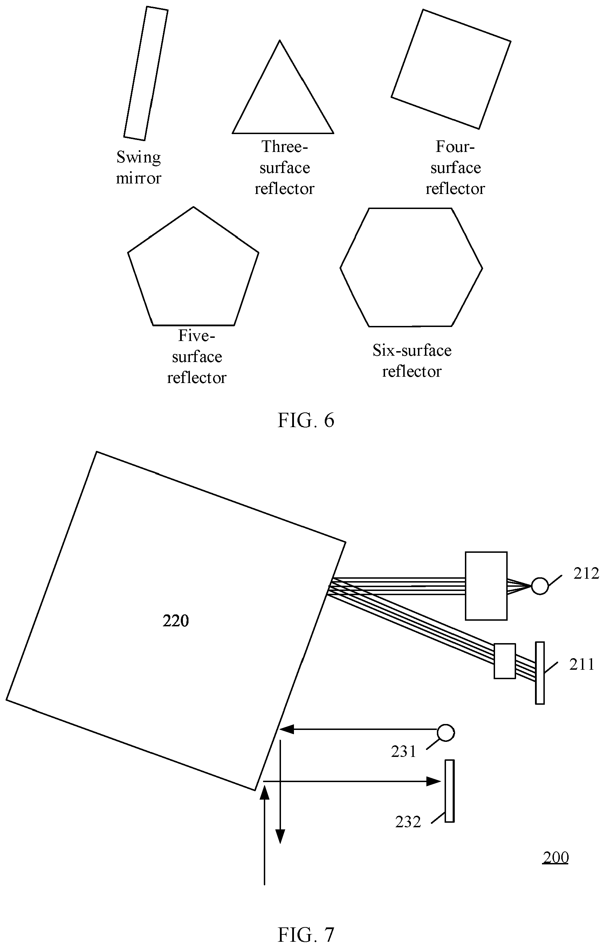

The reflector 120 may be a swing mirror (single-surface/double-surface reflector), a three-surface reflector, a four-surface reflector, a five-surface reflector, a six-surface reflector, or the like. As shown in FIG. 6 (an example in which a reflective surface is in the shape of a regular polygon is used for description, and an actual design may not be limited to a regular polygon). For brevity of description, this application uses an example in which the reflector 120 is a four-surface reflector in a polygonal mirror for description. However, this is not limited in this application, and the reflector may be selected according to an actual requirement. The swing mirror may be considered as a single-surface mirror or a polygonal mirror including two reflective surfaces. The swing mirror may swing along one end to implement light beam scanning, or the swing mirror may rotate along the rotation shaft as a rotation mirror (which may perform circular motion along the rotation shaft). The three-surface reflector, the four-surface reflector, the five-surface reflector, the six-surface reflector, or the like may be used as a rotation mirror.

In a design, the first location 101 is disposed on the reflector. Regardless of a quantity of reflective surfaces included in the reflector, only one first location exists on the reflector.

In another design, a plurality of first locations 101 are disposed on the reflector 120. For example, the first location 101 is disposed on each reflective surface of the reflector 120. With an increasing quantity of the first locations 101 on the reflector 120, measurement precision and detection precision of the reflector 120 can be improved. The reflector 120 shown in FIG. 3 is used as an example. When the reflector 120 rotates by 360°, a rotation speed of the reflector 120 may be measured four times, to correct the rotation speed of the reflector 120, so that the rotation speed of the reflector 120 remains stable. In this way, precision of emitting the second light beam by the second laser emitting unit 131 is ensured, and detection precision of the detection unit 100 is improved. In addition, the controller 140 may continuously correct the rotation speed of the reflector 120 by measuring the rotation speed of the reflector 120 for a plurality of times. This can eliminate an accumulated error that may be caused by long-time rotation of the reflector 120, and can also suppress rotation speed fluctuation of the reflector 120.

Further, optionally, when the first locations 101 are disposed on the plurality of reflective surfaces of the reflector 120, angles between first locations 101 of any two groups of adjacent reflective surfaces are the same. That angles between first locations 101 of two groups of adjacent reflective surfaces are the same may be understood as that angles 0 between any two adjacent first locations 101 and a center O of the reflector 120 when the reflector 120 rotates are the same. For example, the reflector 120 shown in FIG. 3 is a four-surface reflector (the reflector 120 is quadrangular and includes four reflective surfaces). The first location 101 is disposed on each surface, and an angle between first locations 101 of two adjacent reflective surfaces is 90 degrees. When the first laser detection unit 112 receives a light beam emitted by the first laser emitting unit 111 twice consecutively, it may be determined that the reflector 120 rotates by 90 degrees within time of emitting the light beam twice, and a rotation speed of the reflector 120 may be accurately determined. It should be understood that, when the reflector 120 is in the shape of a regular prism, a cross section of the reflector 120 is in the shape of a regular polygon, and a plurality of side surfaces of the reflector 120 are used as reflective surfaces, and the first location 101 of the reflector 120 is located at a same location on each reflective surface.

Specifically, the first location may be located at an edge part of the reflective surface, for example, a start edge or an end edge, or may be located at a location on the reflective surface. The first location may be flexibly adjusted or set according to an actual design requirement.

Further, the detection apparatus 100 may further include a motor. The reflector 120 may be disposed on a rotation shaft of the motor, and the motor drives the reflector 120 to rotate. The controller 140 may adjust a rotation speed of the motor, so as to control the rotation speed of the reflector 120.

The first laser emitting unit 111 may include a laser. For example, the laser may be a single light emitting diode (light emitting diode, LED) or a vertical-cavity surface-emitting laser (vertical-cavity surface-emitting laser, VSCEL), or another light emitting device may be selected as the laser. Further, optionally, the first laser emitting unit may further include another optical device or a device related to an optical path, for example, a lens or a wave plate, to change and design an optical path. This is not specifically limited in this application. Another laser emitting unit in the detection apparatus 100 may have a same or similar structure and composition as the first laser emitting unit, or use a light emitting device that is the same as the first laser emitting unit 111.

The first laser detection unit 112 may include a photosensitive device. For example, the photosensitive device may be a photodiode (photodiode), a PIN diode (PIN diode), a photon avalanche diode (photon avalanche diode, apd), a single photon avalanche diode (single photon avalanche diode, apd), or another photosensitive device. After receiving a reflected light beam, the photosensitive device may output an electrical signal. Further, optionally, the first laser detection unit may further include another optical device or a device related to an optical path, for example, a lens or a wave plate, to change and design an optical path. This is not specifically limited in this application. Another laser detection unit in the detection apparatus 100 may have a same or similar structure and composition as the first laser detection unit, or use a photosensitive device that is the same as the first laser detection unit 112.

It should be understood that, if the light beam emitted by the first laser emitting unit 111 is detected and received by the first laser detection unit 112 after being reflected from the first location 101, it may be considered that intensity of the light beam received by the first laser detection unit 112 exceeds a first threshold, or it may be considered that intensity of an electrical signal output by a photodiode exceeds a second threshold. Alternatively, another photosensitive device may be selected as the first laser detection unit. This is not limited in this application. The first threshold and the second threshold herein may be preset values, or values related to an attribute of the detection unit.

It should be noted herein that both the laser emitting unit and the laser detection unit are connected to corresponding circuits, so as to trigger, by using a controller or a control circuit, the laser to emit laser light, and perform subsequent processing on a signal from a detector, so as to perform target detection. For details, refer to the conventional technology. Details are not described herein again.

Further, optionally, the detection apparatus 100 further includes an emitting mirror group 113 and/or a receiving mirror group 114. The emitting mirror group 113 is located between the first laser emitting unit 111 and the reflector 120, and may be configured to focus the first light beam from the first laser emitting unit 111 to the reflector 120. The receiving mirror group 114 is located between the first laser detection unit 112 and the reflector 120, and may be configured to focus, to the first laser detection unit 112, a reflected light beam reflected from the first location 101. After the emitting mirror group 113 and the receiving mirror group 114 are additionally disposed, the first light beam or the reflected light beam of the first light beam may be prevented from generating stray light, which affects measurement precision of the detection apparatus.

Specifically, the emitting mirror group 113 may include at least one narrow-band optical filter, which may be configured to filter out light outside an operating frequency band in the light beam emitted by the first laser emitting unit 111, so as to reduce interference and improve detection precision. It should be understood that the emitting mirror group 113 may alternatively be applied between another laser emitting unit in the detection apparatus 100 and the reflector 120. Similarly, the receiving mirror group 114 may include at least one narrow-band optical filter, and may be configured to filter out light that is in a light beam reflected by the reflector and that is outside an operating frequency band, so as to reduce stray light interference received by the laser detection unit, and improve detection precision.

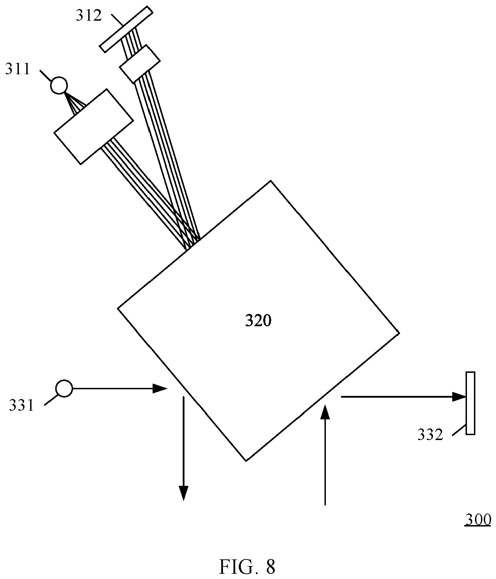

FIG. 7 and FIG. 8 are schematic diagrams of structures of detection apparatuses according to embodiments of this application.

It should be understood that, in the detection apparatus 100 shown in FIG. 3, the first laser emitting unit 111 and the first laser detection unit 112 are located on a first side of the reflector 120, and the second laser emitting unit 131 and the second laser detection unit 132 are located on a second side that is of the reflector 120 and that is opposite to the first side, that is, a target detection unit including the second laser emitting unit 131 and the second laser detection unit 132 and a synchronous transceiver module including the first laser emitting unit 111 and the first laser detection unit 112 may be located on different sides of the reflector 120.

As shown in FIG. 7, in the detection apparatus 200, the first laser emitting unit 211, the first laser detection unit 212, the second laser emitting unit 231, and the second laser detection unit 232 may be located on a same side of the reflector 220, and may simultaneously implement target detection and rotation speed measurement of the reflector by using a same reflective surface of the reflector. Alternatively, as shown in FIG. 8, in the detection apparatus 300, the first laser emitting unit 311 and the first laser detection unit 312 are located on a first side of the reflector 320, and the second laser emitting unit 331 and the second laser detection unit 332 are located on a second side and a third side that are of the reflector 320 and that are opposite to the first side, that is, the second laser emitting unit 331 and the second laser detection unit 332 are respectively located on different sides of the reflector 320.

It should be understood that, in actual production or design, the detection apparatus may include a plurality of laser emitting units and laser detection units, and locations of the plurality of laser emitting units, the laser detection units, and the reflector may be adjusted based on internal space of the detection apparatus. This is not limited in this application.

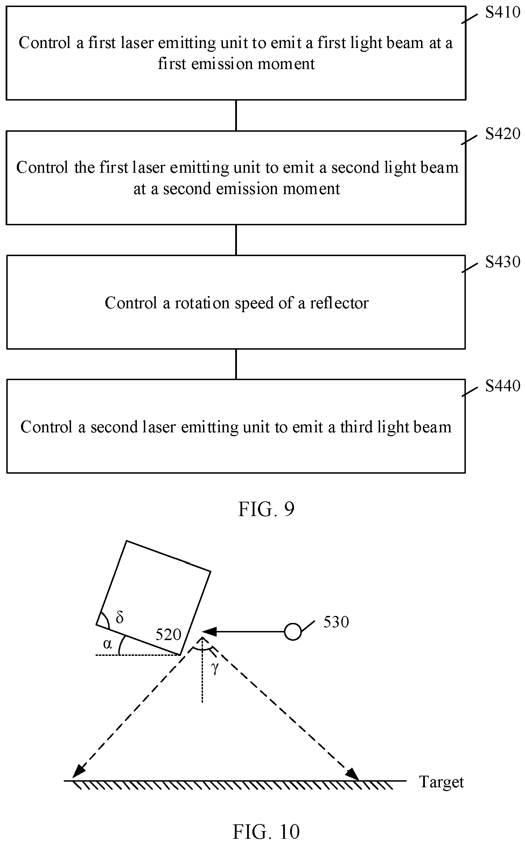

FIG. 9 shows a control method according to an embodiment of this application. The control method may be applied to any one of the foregoing detection apparatuses.

The control method may be executed by a control apparatus including at least one controller in the detection apparatus, or may be executed by another control apparatus including at least one controller. The control apparatus may be located in the detection apparatus, or be independent of the detection apparatus.

S410: Control a first laser emitting unit to emit a first light beam at a first emission moment.

The first laser emitting unit is controlled to emit the first light beam at the first emission moment, and the first light beam is received by a first laser detection unit after being reflected from a first location of a reflector.

S420: Control the first laser emitting unit to emit a second light beam at a second emission moment.

The first laser emitting unit is controlled to emit the second light beam at the second emission moment, and the second light beam is received by the first laser detection unit after being reflected from a second location of the reflector. The first location and the second location may be a same location on the reflector. For example, when the reflector is a swing mirror, only a single reflective surface of the reflector is used, and only one preset location may exist. The first light beam and the second light beam may be reflected from the same location in different rotation periods of the reflector and then emitted into the first laser detection unit. Alternatively, the first location and the second location may be different preset locations, for example, may be locations on two adjacent reflective surfaces on the reflector, or may be locations on non-adjacent reflective surfaces.

When a rotation speed of the reflector does not deviate, adjustment does not need to be performed, and step S440 may be directly performed to perform target detection, in other words, step S430 is an optional step in a specific scenario. If it is determined that the rotation speed of the reflector deviates, control is required, and step S430 is performed.

S430: Control the rotation speed of the reflector.

The rotation speed of the reflector is controlled based on an angle by which the reflector rotates between the first emission moment and the second emission moment.

It should be understood that, because the first location and the second location on the reflector are determined, the angle by which the reflector rotates between the first emission moment and the second emission moment may be determined. For example, the detection apparatus shown in FIG. 3 is used as an example. The first location and the second location are located on two adjacent reflective surfaces. Between the first emission moment and the second emission moment, an angle of a center at which the reflector rotates is 90 degrees. When the first laser detection unit receives two light beams in sequence, it may be determined that the angle by which the reflector rotates is 90 degrees. Therefore, the rotation speed of the reflector may be determined based on rotation time of the reflector and the angle by which the reflector rotates. In addition, a rotation speed of the reflector at a next moment may be adjusted based on the rotation speed of the reflector. For example, when the measured rotation speed of the reflector is low relative to a reference rotation speed, the rotation speed of the reflector at the next moment may be increased; or when the measured rotation speed of the reflector is high relative to a reference rotation speed, the rotation speed of the reflector at the next moment may be decreased. This can eliminate an accumulated error that may be caused by long-time rotation of the reflector, and can also suppress rotation speed fluctuation of the reflector, so that the rotation speed of the reflector 120 remains stable. In this way, precision of emitting a light beam by the second laser emitting unit 131 is ensured, and detection precision of the detection apparatus is improved. Herein, the adjustment of the rotation speed of the reflector at the next moment may be reflected in that the rotation speed of the reflector is the reference rotation speed when the first laser detection unit receives a next light beam. A person skilled in the art may understand that, based on a process design or a measurement error, content of a value or a parameter in this application may have a specific error. Within a range allowed by the process design and product precision, the error may be ignored in the solution description of this application. For example, "a rotation speed of a reflector is a reference rotation speed" may be understood as that the rotation speed of the reflector and the reference rotation speed are the same within a range allowed by the error.

S440: Control, based on a reflected light beam of the first light beam received by the first laser detection unit, a second laser emitting unit to emit a third light beam, where the third light beam is emitted to a detection area by using the reflector, and a second laser detection unit may be configured to receive, by using the reflector, a reflected light beam that is of the third light beam and that passes through a target in the detection area. The detection apparatus may include a plurality of laser emitting units and a plurality of laser detection units, and are configured to perform target detection, so that detection precision or a measurement range of the detection apparatus can be further improved. Alternatively, the second laser emitting unit and the first laser emitting unit of the detection apparatus shown in FIG. 5 may be a same laser emitting unit. Similarly, the second laser detection unit and the first laser detection unit may be a same laser detection unit, to reduce a size of the detection apparatus.

In a design, the controlling a second laser emitting unit to emit a third light beam may include: controlling the second laser emitting unit to start emitting the third light beam at a third emission moment, and controlling the second laser emitting unit to stop emitting the third light beam at a fourth emission moment. The third light beam may be used for target detection. A rotation angle of the reflector at the third emission moment is a first angle (an angle with the first direction), a rotation angle of the reflector at the fourth emission moment is a second angle (an angle with the first direction), and a rotation angle of the reflector at the first emission moment is a third angle (an angle with the first direction). The third angle is set beyond an angle range of the first angle and the second angle. It may also be understood that, in this design, in a target detection period, rotation speed measurement is not performed, and the rotation speed measurement and the target detection may be processed in a time-division manner, to avoid interference between light beams.

FIG. 10 is a schematic diagram of an angle of view of a second laser emitting unit 530 in a detection apparatus. The angle of view of the second laser emitting unit 530 is $\gamma$. It can be learned from a geometric relationship that the angle

$$\alpha = \frac{1}{2}\gamma$$

of view $\gamma$ of the second laser emitting unit 530 is twice a rotation angle $\alpha$ of a reflector 520, that is, . Therefore, a first angle and a second angle of the reflector 520 may be determined based on the angle of view $\gamma$ of the second laser emitting unit 530.

For the detection apparatus, the second laser emitting unit in the detection apparatus may emit a third light beam at a rotation angle of the reflector between the first angle and the second angle, that is, the second laser emitting unit may perform target detection when the reflector rotates between the first angle and the second angle. Therefore, a third angle may be set beyond an angle range of the first angle and the second angle, in other words, the first laser emitting unit may perform synchronous detection at time other than time when the detection apparatus performs target detection. This can ensure that a light beam emitted by the first laser emitting unit and a light beam emitted by the second laser emitting unit do not interfere with each other, to improve detection precision.

When the rotation angle $\alpha$ of the reflector at a first emission moment is the third angle, a first light beam emitted by the first laser emitting unit is received by a first laser detection unit after being reflected from a first location. The second laser emitting unit 530 may be started at a third emission moment to start emitting the third light beam. In this case, the rotation angle $\alpha$ of the reflector 520 is the first angle, and the detection apparatus starts target detection. The second laser emitting unit 530 may be shut off at a fourth emission moment to stop emitting the third light beam. In this case, the rotation angle $\alpha$ of the reflector 520 is the second angle, and the detection apparatus ends target detection.

Optionally, the rotation angle of the reflector at the current moment may be determined based on the rotation speed of the reflector and the first emission moment. For example, at the first emission moment, the first light beam emitted by the first laser emitting unit is emitted into the first laser detection unit through the first location, and a rotation angle of the reflector at the moment is $\beta$. The rotation angle $\alpha = \beta + $ rotation speed $\times t$ of the reflector at the current moment may be calculated based on a time difference $t$ between the current moment and the first emission moment, and the rotation speed of the reflector.

Therefore, the detection apparatus may accurately control, based on the rotation angle of the reflector at the current moment, time of emitting the third light beam by the second laser emitting unit 530. That is, when a rotation angle at a first moment of the reflector is the first angle, the second laser emitting unit 530 starts emitting the third light beam. When a rotation angle at a second moment of the reflector is the second angle, the second laser emitting unit 530 stops emitting the third light beam. In addition to saving energy of the detection apparatus, precision of detection performed by the second laser emitting unit 530 can also be ensured.

Optionally, the third emission moment may be determined based on the first emission moment and a first delay. The first delay is time required for rotating the rotation angle of the reflector 520 from the third angle to the first angle. The first delay may be a preset value, and is determined based on the first angle, the third angle, and a reference rotation speed of the reflector. For example, when the angle of view $\gamma$ of the second laser emitting unit 530 is 140°, a corresponding first angle is 10°, and a corresponding second angle is 80°. That is, when the rotation angle $\alpha$ of the reflector 520 is between 10° and 80°, the second laser emitting unit 530 is in a working state, and emits the third light beam. The third angle may be set to 8°. When the rotation angle $\alpha$ of the reflector 520 at the first emission moment is 8°, in other words, when the first light beam emitted by the first laser emitting unit at the first emission moment is reflected from the preset location and then emitted into the first laser detection unit, it is detected that the rotation angle of the reflector 520 reaches the third angle. The third moment at which the second laser emitting unit starts emitting the third light beam may be determined based on the first delay required for rotating the rotation angle $\alpha$ of the reflector 520 from 8° to 10° and the first emission moment.

It should be understood that, in the method provided in this embodiment of this application, the first laser emitting unit and the first laser detection unit may be used as a synchronous transceiver module, to ensure that the rotation speed of the reflector remains the reference rotation speed. Therefore, the third emission moment at which the second laser emitting unit emits the third light beam may be determined based on the reference rotation speed and the first emission moment at which the first laser emitting unit emits the first light beam, so that the second laser emitting unit may prepare to emit the third light beam at the third emission moment to perform target detection. This ensures that a start moment of each frame in which the detection unit performs target detection is accurate, and point cloud data in the frame obtained by the detection apparatus by using the third light beam is accurate. In this way, overall energy consumption can be reduced, start of each frame is accurate, and incomplete point cloud is eliminated.

Optionally, when the rotation angle $\alpha$ of the reflector 520 is between the first angle and the second angle, the first laser emitting unit may stop working, so that interference caused by the light beam emitted by the first laser emitting unit to the second laser emitting unit 530 can be reduced, and detection precision of the detection apparatus can be improved.

It should be noted that an angle error exists in processing of the reflector 520. As shown in FIG. 10, the angle error may range from a second level to a degree level (1 degree = 60 arc-minutes = 3600 arc-seconds), in other words, a vertex angle $\delta$ may not be a strict right angle. In this case, any adjacent reflective surfaces of the four reflective surfaces of the reflector 520 are not strictly perpendicular, and the first angle of the reflector when the second laser emitting unit 530 emits the third light beam at the third emission moment changes, therefore, precision of the point cloud data obtained by the detection apparatus is affected. Therefore, accurate angle identification may be accomplished based on the preset value, that is, a first preset value is determined based on the included angle error, and the third emission moment of the second laser emitting unit 530 is adjusted based on the first preset value. The entire detection apparatus can more accurately control the second laser emitting unit 530 to send the third light beam at the third emission moment, so that the point cloud data in the frame obtained by the detection apparatus by using the third light beam is as accurate as possible. This cannot be identified by a conventional optical code disc.

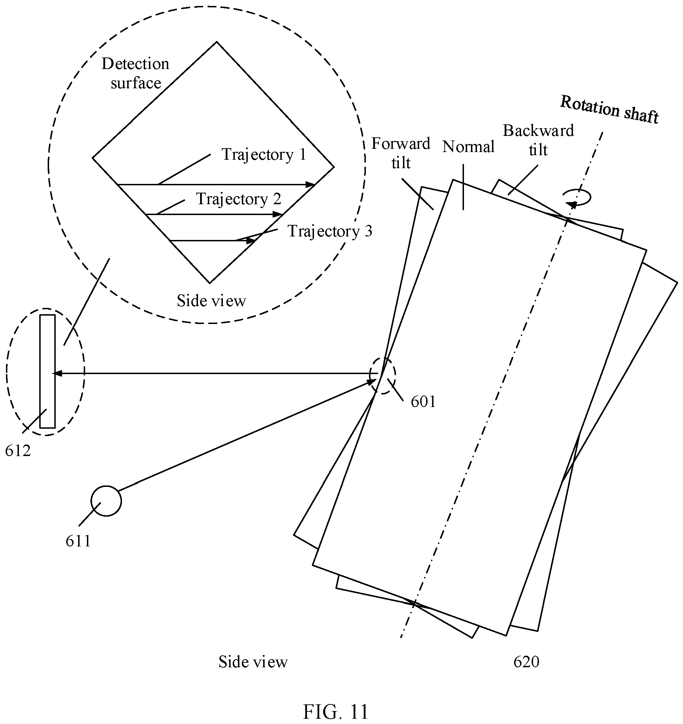

FIG. 11 is a schematic diagram when a reflector tilts according to an embodiment of this application.

It should be understood that, when a reflector 620 rotates, due to an initial deviation, an accumulated deviation, a rotation deviation, or the like of a rotation shaft that drives the reflector 620 to rotate, the reflector 620 may tilt to a specific extent. In this case, a field of view of the detection apparatus tilts, and a point cloud obtained by the detection apparatus tilts, thereby reducing detection precision.

As shown in FIG. 11, for brevity of description, an example in which a detection surface of a first laser detection unit 612 is in the shape of a rectangle is used for description, and an angle formed by a center line of the detection surface and a reference direction is an acute angle. A person skilled in the art may understand that, if the reference direction coincides with the center line, the light beams that are emitted by the first laser emitting unit and that have different incident angles have a same trajectory on the detection surface after being reflected from a first location of the reflector. That is, in the solution of this application, the detection surface needs to rotate in a plane in which the detection surface is located, so that the light beams that are emitted by the first laser emitting unit and that have different incident angles have different trajectories on the detection surface after being reflected from the first location of the reflector. For example, the reference direction may be a direction perpendicular to a horizontal plane.

Alternatively, the reference direction may be a direction of a trajectory on the detection surface after the light beam is reflected from the first location of the reflector, that is, an angle formed by the center line of the detection surface and the reference direction is an acute angle, or may be understood as an angle formed by the center line of the detection surface and an extension line of the trajectory or the trajectory is an acute angle. In this case, a first light beam emitted by a first laser emitting unit 611 is reflected by the reflector 620 of different tilt degrees, and the reflected light beam has different trajectories on the detection surface of the first laser detection unit 612. It should be understood that the center line of the detection surface may be considered as a connection line between midpoints of long sides of the detection surface, or a connection line between midpoints of short sides of the detection surface. A same trajectory may be considered as that the trajectory of the light beam on the detection surface may be obtained through translation.

It should be understood that the first laser detection unit 612 includes a photosensitive device, and the trajectory on the detection surface of the first laser detection unit 612 may be understood as a set of all points that receive an electrical signal generated by a light beam on the detection surface of the first laser detection unit 612 after the light beam is emitted.

For example, as shown in FIG. 11, when the reflector 620 rotates along a rotation shaft, a trajectory 2 is a set of all points at which the light beam emitted by the first laser emitting unit 611 reaches the detection surface after being reflected from a first location 601 of the reflector 620 when the reflector 620 does not tilt. A trajectory 1 is a set of all points at which the light beam emitted by the first laser emitting unit 611 reaches the detection surface of the first laser detection unit 612 after being reflected from the first location 601 of the reflector 620 when the reflector 620 tilts backward. Because the reflector 620 tilts backward, a location at which the trajectory 1 reaches the detection surface of the first laser detection unit 612 moves upward relative to the trajectory 2, and a length of an optical path of the trajectory 1 is increased relative to the trajectory 2. A trajectory 3 is a set of all points at which the light beam emitted by the first laser emitting unit 611 reaches the detection surface of the first laser detection unit 612 after being reflected from the first location 601 of the reflector 620 when the reflector 620 tilts forward. Because the reflector 620 tilts forward, a location at which the trajectory 3 reaches the detection surface of the first laser detection unit 612 moves downward relative to the trajectory 2, and a length of an optical path of the trajectory 3 is decreased relative to the trajectory 2.

Therefore, the length of the trajectory 2 may be determined in advance, and is used as a standard value. The structure shown in FIG. 10 is used as an example. The length of the trajectory of the light beam emitted by the first laser emitting unit 611 on the detection surface of the first laser detection unit 612 may be compared with the standard value. When the length of the trajectory of the light beam is greater than the standard value, it may be determined that the reflector 620 tilts backward. When the length of the trajectory of the light beam is less than the standard value, it may be determined that the reflector 620 tilts forward.

Optionally, a tilt angle and a tilt direction of the current reflector 620 relative to a normal state may be determined based on a difference between a length of a trajectory of a reflected light beam on the detection surface of the first laser detection unit 612 and the standard value. As shown in Table 1, this embodiment of this application is merely used as an example herein, and a correspondence between a tilt amount and a tilt angle may be determined based on actual production or design. Point cloud data obtained by the detection apparatus may be corrected based on the obtained tilt angle. For example, when the tilt angle is 0.1°, the tilt direction is a forward tilt, and a detection radius of the detection apparatus is 100m. In this case, point cloud data obtained by the tilted detection apparatus may be corrected based on the foregoing data, and the data may be corrected by 10m.

**Table 1**

| Trajectory length (mm) | Standard value (mm) | Tilt angle (°) | Tilt direction |
|---|---|---|---|
| 14.5 | 15 | 0.1 | Forward tilt |
| 15 | 15 | 0 | Normal |
| 15.5 | 15 | 0.1 | Backward tilt |

It should be understood that Table 1 is merely used as an example. In an actual application, because the detection surface of the first laser detection unit 612 may not be a plane, the tilt angle and the tilt direction of the reflector 620 relative to the normal state may alternatively be determined based on a ratio of the trajectory to the standard value or the like.

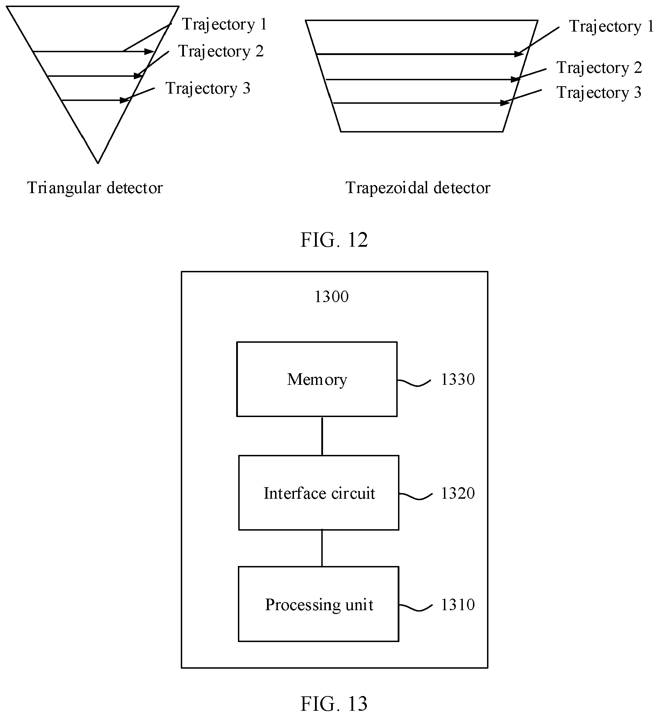

Optionally, in this embodiment of this application, an example in which the first laser detection unit 612 is in the shape of a rectangle is used for description. To ensure that the detection surface of the first laser detection unit 612 is tilted, the first laser detection unit 612 needs to be disposed rotatably. Alternatively, a laser detection unit including a tilted detection surface that is in the shape of a triangle or a trapezoid, may be selected, and does not need to be disposed rotatably, so that lengths of trajectories of light beams reflected by reflector 620 of different tilt degrees on the detection surface of the first laser detection unit 612 may be different. As shown in FIG. 12, this is not limited in this application, and may be selected based on actual production or design.

FIG. 13 is a schematic diagram of a structure of a control apparatus of a detection apparatus according to an embodiment of this application.

The control apparatus 1300 of the detection apparatus includes at least one processing unit 1310 and an interface circuit 1320. Optionally, the control apparatus may further include a memory 1330, and the memory 1330 is configured to store a program. The processing unit herein may be the foregoing controller.

When the program runs in the at least one processing unit 1310, the at least one processing unit 1310 is configured to perform the detection apparatus control method described above.

In a design, through functional division, the detection apparatus may have a plurality of processing units, different processing units perform different control functions, and the plurality of processing units communicate with a processing unit that performs central control, to perform information and data communication with the processing unit. For example, a first processing unit is configured to control a laser emitting unit; a second processing unit is configured to control a reflector; a third processing unit is configured to perform analog-to-digital conversion, for example, is an analog-to-digital converter ADC circuit; a fourth processing unit is configured to perform optical-to-electrical signal conversion, for example, is a photodiode circuit; and/or a fifth processing unit performs digital signal processing.

These processing units may be various types of processors, integrated circuits, field-programmable gate arrays FPGAs, or the like. This is not specifically limited in this application, and a composition form that can implement the foregoing functions is integrated on a chip. For ease of description, the processing unit may also be referred to as a processor. Further, the processing unit may be integrated on one chip or distributed on a plurality of chips. This is not specifically limited in this application, and is subject to a specific design.

An embodiment of this application further provides a computer-readable storage medium. The computer-readable storage medium has program instructions. When the program instructions are directly or indirectly executed, the foregoing method is implemented.

An embodiment of this application further provides a computer program product including instructions. When the computer program product is run on a computing device, the computing device is enabled to perform the foregoing method, or the computing device is enabled to implement a function of the foregoing apparatus.

An embodiment of this application further provides a chip system. The chip system includes at least one processing unit and an interface circuit. The interface circuit is configured to provide program instructions or data for the at least one processing unit, and the at least one processor is configured to execute the program instructions to implement the foregoing method.

An embodiment of this application further provides a lidar system, including a processor and the detection apparatus described above. The processor is configured to control at least one laser emitting unit in the detection apparatus. The processor is further configured to perform target detection based on a reflected light beam received by at least one laser detection unit.

An embodiment of this application further provides a terminal, including the foregoing detection apparatus. Further, the terminal may be an intelligent transportation device (a vehicle or an unmanned aerial vehicle), a smart home device, an intelligent manufacturing device, a surveying and mapping device, a robot, or the like. The intelligent transportation device may be, for example, an automated guided vehicle (automated guided vehicle, AGV) or an unmanned transportation vehicle.

A person of ordinary skill in the art may be aware that, in combination with the examples described in embodiments disclosed in this specification, units, modules, and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A detection apparatus, comprising at least one laser emitting unit, at least one laser detection unit, a reflector, and at least one controller, wherein

   the at least one laser emitting unit comprises a first laser emitting unit, and the at least one laser detection unit comprises a first laser detection unit;
   the first laser emitting unit is configured to emit a first light beam, wherein the first light beam is received by the first laser detection unit after being reflected from a first location of the reflector; and
   the at least one controller controls, based on a reflected light beam of the first light beam received by the first laser detection unit, one or more laser emitting units to emit a second light beam, wherein the second light beam is used for target detection.

2. The detection apparatus according to claim 1, wherein
   the at least one controller further adjusts a rotation speed of the reflector based on the reflected light beam of the first light beam received by the first laser detection unit.

3. The detection apparatus according to claim 1 or 2, wherein

the one or more laser emitting units comprise the first laser emitting unit, and the at least one controller is configured to control the first laser emitting unit to emit the second light beam; or
the at least one laser emitting unit comprises at least one second laser emitting unit, the at least one controller is configured to control the at least one second laser emitting unit to emit the second light beam, and the second laser emitting unit is different from the first laser emitting unit.

4. The detection apparatus according to any one of claims 1 to 3, wherein

the second light beam is emitted to a detection area through the reflector; and
one or more laser detection units corresponding to the one or more laser emitting units are configured to receive a reflected light beam of the second light beam by using the reflector.

5. The detection apparatus according to claim 4, wherein
the at least one controller is configured to perform target detection based on the reflected light beam of the second light beam.

6. The detection apparatus according to any one of claims 1 to 5, wherein
locations of the first laser emitting unit and the first laser detection unit are corresponding to the first location of the reflector.

7. The detection apparatus according to any one of claims 1 to 6, wherein

the reflector comprises a plurality of reflective surfaces, and the first location is located on a first reflective surface in the plurality of reflective surfaces; and
the first reflective surface is any one of the plurality of reflective surfaces.

8. The detection apparatus according to claim 7, wherein in the plurality of reflective surfaces, angles between first locations of any two groups of adjacent reflective surfaces are the same.

9. The detection apparatus according to any one of claims 1 to 8, wherein a first emitting mirror group is disposed between the first laser emitting unit and the reflector, and the first emitting mirror group is configured to focus a light beam from the first laser emitting unit to the reflector; and/or
a first receiving mirror group is disposed between the first laser detection unit and the reflector, and the first receiving mirror group is configured to focus, to the first laser detection unit, a reflected light beam reflected from the first location.

10. The detection apparatus according to claim 9, wherein the mirror group comprises at least one narrow-band optical filter.

11. The detection apparatus according to any one of claims 1 to 10, wherein the at least one laser emitting unit comprises a second laser emitting unit, the at least one laser detection unit comprises a second laser detection unit, the first laser emitting unit and the first laser detection unit are located on a first side of the reflector, the second laser emitting unit and the second laser detection unit are located on a second side of the reflector, and the second side is different from the first side, wherein
the second laser emitting unit is configured to emit the second light beam, and the second detection unit is configured to receive the second light beam reflected by the reflector.

12. The detection apparatus according to any one of claims 1 to 10, wherein the at least one laser emitting unit comprises a second laser emitting unit, the at least one laser detection unit comprises a second laser detection unit, and the first laser emitting unit, the first laser detection unit, the second laser emitting unit, and the second laser detection unit are located on a same side of the reflector, wherein
the second laser emitting unit is configured to emit the second light beam, and the second detection unit is configured to receive the second light beam reflected by the reflector.

13. The detection apparatus according to any one of claims 1 to 12, wherein the reflector is a swing mirror, a three-surface reflector, a four-surface reflector, a five-surface reflector, or a six-surface reflector.

14. A control method, applied to a detection apparatus, wherein the method comprises:

controlling a first laser emitting unit of the detection apparatus to emit a first light beam at a first emission moment, wherein the first light beam is received by a first laser detection unit of the detection apparatus after being reflected from a first location of a reflector of the detection apparatus;
controlling the first laser emitting unit to emit a second light beam at a second emission moment, wherein the second light beam is received by the first laser detection unit after being reflected from a second location of the reflector; and
controlling a rotation speed of the reflector based on an angle by which the reflector rotates between the first emission moment and the second emission moment.

15. The method according to claim 14, wherein the controlling a rotation speed of the reflector comprises:

determining the rotation speed of the reflector based on the angle by which the reflector rotates between the first emission moment and the second emission moment; and
adjusting a rotation speed of the reflector at a next moment based on the rotation speed of the refl ector.

16. The method according to claim 14, wherein the method further comprises:

controlling, based on a reflected light beam of the first light beam received by the first laser detection unit, one or more laser emitting units to emit a third light beam; and
emitting the third light beam to a detection area through the reflector, wherein
one or more laser detection units corresponding to the one or more laser emitting units are configured to receive, by using the reflector, a reflected light beam that is of the third light beam and that passes through the detection area.

17. The method according to claim 16, wherein the controlling one or more laser emitting units to emit a third light beam comprises:

controlling the one or more laser emitting units to start emitting the third light beam at a third emission moment, wherein a rotation angle of the reflector at the third emission moment is a first angle; and
controlling the one or more laser emitting units to stop emitting the third light beam at a fourth emission moment, wherein a rotation angle of the reflector at the fourth emission moment is a second angle, wherein
a rotation angle of the reflector at the first emission moment is a third angle, and the third angle does not belong to an angle range of the first angle and the second angle.

18. The method according to claim 17, wherein the method further comprises:
determining the third emission moment based on the first emission moment and a first delay, wherein the first delay is time required for the reflector to rotate from the third angle to the first angle, and the first delay is predefined or preset.

19. The method according to claim 18, wherein the method further comprises:
determining the fourth emission moment based on the third emission moment, the first delay, and a first preset value, wherein the first preset value is related to an included angle error of the refl ector.

20. The method according to claim 16, wherein the method further comprises:

determining an offset angle of the reflector based on a first trajectory and a second trajectory that are on a detection surface of the first laser detection unit and that are obtained after the first light beam is reflected from the first location of the reflector, wherein the second trajectory is a trajectory that is on the detection surface and that is obtained after the first light beam is reflected from the first location of the reflector when the reflector does not deviate; and
correcting, based on the offset angle, point cloud data obtained by the detection apparatus, wherein the point cloud data is obtained based on the reflected light beam that is of the third light beam and that passes through the detection area.

21. The method according to claim 20, wherein the detection surface is triangular or trapezoidal.

**22.** The method according to claim 20, wherein
the detection surface is rectangular, and an angle formed by a center line of the detection surface and the second trajectory is an acute angle.

**23.** A control apparatus for a detection apparatus, comprising at least one memory and at least one processor, wherein the at least one memory is configured to store a program, and the at least one processor is configured to run the program, to implement the method according to any one of claims 14 to 22.

**24.** A chip, comprising at least one processing unit and an interface circuit, wherein the interface circuit is configured to provide program instructions or data for the at least one processing unit, and the at least one processing unit is configured to execute the program instructions, to implement the method according to any one of claims 14 to 22.

**25.** A computer-readable storage medium, wherein the computer-readable storage medium stores program code executed by a device, and when the program code is executed by the device, the method according to any one of claims 14 to 22 is implemented.

**26.** A terminal, wherein the terminal comprises the detection apparatus according to any one of claims 1 to 13, or the control apparatus according to claim 23, or the chip according to claim 24.

**27.** The terminal according to claim 26, wherein the terminal is an intelligent transportation device, an intelligent manufacturing device, a smart home device, or a surveying and mapping device.

Grating

Photoelectric
code disc

Rotation
shaft

Converging
lens

Signal
processing

Photosensitive
element

Light baffle
plate

Light
source

FIG. 1

Light absorption element

Fixed grating

Photoelectric code disc

Light source

Rotation grating

Rotation shaft

FIG. 2

Top view

FIG. 3

Controller 140

Rotation shaft

101

114

112

113

111

110

First light beam

120

Second light beam

131

132

First direction

100

Side view

FIG. 4

Controller

Laser detection unit

Laser emitting unit

O

100

FIG. 5

Swing
mirror

Three-
surface
reflector

Four-
surface
reflector

Five-
surface
reflector

Six-surface
reflector

FIG. 6

220

212

211

231

232

200

FIG. 7

FIG. 8

| Control a first laser emitting unit to emit a first light beam at a first emission moment | S410 |

| Control the first laser emitting unit to emit a second light beam at a second emission moment | S420 |

| Control a rotation speed of a reflector | S430 |

| Control a second laser emitting unit to emit a third light beam | S440 |

FIG. 9

FIG. 10

Detection surface

Trajectory 1

Trajectory 2

Trajectory 3

Side view

Rotation shaft

Forward tilt  Normal  Backward tilt

601

612

611

Side view

620

FIG. 11

Trajectory 1
Trajectory 2
Trajectory 3

Trajectory 1
Trajectory 2
Trajectory 3

Triangular detector

Trapezoidal detector

FIG. 12

1300

Memory — 1330

Interface circuit — 1320

Processing unit — 1310

FIG. 13

**INTERNATIONAL SEARCH REPORT**

| | |
|---|---|
| International application No. | |
| **PCT/CN2021/090982** | |

**A.    CLASSIFICATION OF SUBJECT MATTER**

G01S 7/481(2006.01)i;  G01S 17/02(2020.01)i

According to International Patent Classification (IPC) or to both national classification and IPC

**B.    FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, WPABSC, EPTXTC, VEN, DWPI: 激光, 距离, 测距, 扫描, 雷达, 镜, 反射, 转, 角度, 转速, 时序, 时刻, 同步, 码盘, 贵, 成本, 价格, lidar, laser, scan+, mirror?, reflect+, reverberat+, rotat+, angle?, synchro+, time+, schedul+, expensive, cost, price

**C.    DOCUMENTS CONSIDERED TO BE RELEVANT**

| Category* | Citation of document, with indication, where appropriate, of the relevant passages | Relevant to claim No. |
|---|---|---|
| A | CN 105403169 A (WATCHDATA SYSTEM CO., LTD.) 16 March 2016 (2016-03-16) description, paragraphs 0027-0050 and figures 1-6 | 1-27 |
| A | CN 109725299 A (BEIJING SURESTAR TECHNOLOGY CO., LTD.) 07 May 2019 (2019-05-07) entire document | 1-27 |
| A | CN 204613756 U (BEIJING WANJI TECHNOLOGY CO., LTD.) 02 September 2015 (2015-09-02) entire document | 1-27 |
| A | CN 209342906 U (GUANGZHOU WEI SI AUTOMOBILE PARTS CO., LTD.) 03 September 2019 (2019-09-03) entire document | 1-27 |
| A | CN 207037075 U (BEIJING YINTAILI TECHNOLOGY CO., LTD.) 23 February 2018 (2018-02-23) entire document | 1-27 |
| A | US 6317202 B1 (DENSO CORP.) 13 November 2001 (2001-11-13) entire document | 1-27 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2022** | **25 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/090982**

C.     DOCUMENTS CONSIDERED TO BE RELEVANT

| Category* | Citation of document, with indication, where appropriate, of the relevant passages | Relevant to claim No. |
|---|---|---|
| A | US 9239959 B1 (LOCKHEED MARTIN CORPORATION) 19 January 2016 (2016-01-19) entire document | 1-27 |

Form PCT/ISA/210 (second sheet) (January 2015)

INTERNATIONAL SEARCH REPORT
Information on patent family members

International application No.

**PCT/CN2021/090982**

| Patent document cited in search report | | | Publication date (day/month/year) | Patent family member(s) | | | Publication date (day/month/year) |
|---|---|---|---|---|---|---|---|
| CN | 105403169 | A | 16 March 2016 | CN | 105403169 | B | 13 April 2018 |
| CN | 109725299 | A | 07 May 2019 | US | 2020326413 | A1 | 15 October 2020 |
| | | | | US | 2021088630 | A9 | 25 March 2021 |
| | | | | WO | 2018192270 | A1 | 25 October 2018 |
| | | | | DE | 202018006300 | U1 | 19 December 2019 |
| | | | | DE | 112018002081 | T5 | 02 July 2020 |
| CN | 204613756 | U | 02 September 2015 | None | | | |
| CN | 209342906 | U | 03 September 2019 | None | | | |
| CN | 207037075 | U | 23 February 2018 | None | | | |
| US | 6317202 | B1 | 13 November 2001 | JP | 2000147124 | A | 26 May 2000 |
| | | | | DE | 19954362 | A1 | 29 June 2000 |
| US | 9239959 | B1 | 19 January 2016 | None | | | |

Form PCT/ISA/210 (patent family annex) (January 2015)